# EUROPEAN PATENT SPECIFICATION

(11) **EP 1 647 740 B1**
(45) Date of publication and mention of the grant of the patent: **05.11.2008**
(21) Application number: 05022423.7
(22) Date of filing: 14.10.2005
(51) Int. Cl.: F16H 25/22, F16H 25/24

(54) **Cooling device for ball screw assembly**
Vorrichtung zum Kühlen für einen Kugelgewindetrieb
Dispositif de refroidissement pour une ensemble vis et écrou à billes

(30) Priority: 15.10.2004 KR 2004082478; 29.11.2004 KR 2004098801
(43) Date of publication of application: 19.04.2006
(73) Proprietor: Doosan Infracore Co., Ltd., Dong-gu Incheon 401-020 (KR)
(72) Inventor: Lee, Joong Kwon, Busan 616-783 (KR)
(74) Representative: Driver, Virginia Rozanne

(56) References cited:
- US-A- 3 068 713
- US-A1- 2002 152 822
- US-A1- 2003 089 187
- PATENT ABSTRACTS OF JAPAN vol. 2000, no. 21, 3 August 2001 (2001-08-03) -& JP 2001 108052 A (TOSHIBA MACH CO LTD), 20 April 2001 (2001-04-20)

## Description

### BACKGROUND OF THE INVENTION

### Field of the Invention

The present invention relates to a ball screw assembly, according to the preamble of claim 1, that is used to convert a rotary motion into a linear motion, and more particularly, to a cooling device for a ball screw assembly that is excellent in terms of machinability, assembling easiness, and maintainability of cooling components, thereby improving the productivity and quality thereof.

### Background of the Related Art

Generally, a ball screw assembly is used to convert a rotary motion into a linear motion. Especially, a ball screw assembly, which is used in machine tools or multi-task machines requiring high speed and high precision should remove frictional heat generated upon the high-speed driving thereof. To this end, the ball screw assembly needs a cooling device such that the frictional heat generated during the motion is appropriately eliminated.

Such a cooling device for the ball screw assembly is adopted to minimize the thermal displacement of a ball screw, thereby improving a degree of machining of the ball screw and extending the life thereof.

Examples of the prior arts related to a cooling device for a ball screw assembly include Japanese Patent Laid-Open Publication Nos. 2000-230617(Laid-open date: Aug 22, 2000), 2001-295909(Laid-open date: Oct 26, 2001), 2002-310258(Laid-open date: Oct 23, 2002), 2002-372119(Laid-open date: Dec 26, 2002), and 2003-172427(Laid-open date: Jun 20, 2003).

Japanese Patent Laid-Open Publication No. 2000-230617 discloses a cooling structure in which air/oil mist which flows to screw balls via an air supply path formed along a ball nut such that the ball nut is cooled down and at the same time a ball support is lubricated.

Japanese Patent Laid-Open Publication No. 2001-295909 discloses a cooling structure in which cooling water is first supplied through a cooling medium tube installed along the inside of a ball screw shaft and discharged in a U-like shape, and then, the cooling water is supplied through a spirally disposed cooling medium tube formed along the inside of a ball nut and discharged in a reverse direction thereto, such that the temperature on the ball nut does not exceed a critical temperature of grease when detected by a temperature detector.

Japanese Patent Laid-Open Publication No. 2002-310258 discloses a cooling structure in which a coolant-circulating groove formed around the ball nut communicates with the slots on the both side covers, such that a coolant is circulated and discharged in a zigzag way, thereby achieving the cooling effect for the ball screw assembly.

Japanese Patent Laid-Open Publication No. 2002-372119 discloses a cooling structure in which a plurality of cooling holes are formed axially around the circumferential surface of a ball nut, and the ventilation is carried out through the plurality of cooling holes when the ball nut is moved along a ball screw shaft, thereby achieving the cooling effect.

Japanese Patent Laid-Open Publication No. 2003-172427 discloses a cooling structure in which cooling agent having a good heat transfer capability is filled in a round cavity in the interior of the ball nut thereby achieving the cooling effect.

According to these prior arts, however, since the fluid flow passageway is directly formed on the ball nut, the structure of the ball nut should be additionally modified, which makes it impossible to be directly installed to the existing ball screws.

Furthermore, the cooling flow passageway is formed just along the inside of the ball nut body, which makes it difficult to manufacture such a new structure of the ball nut. Even in a case where the cooling flow passageway having such a divided structure is formed, the structure of ball nut has to be modified and the number of assembled parts is accordingly increased, which makes the quality and productivity thereof greatly low.

The same holds for the system disclosed in US 2002/0152822 A1, which teaches a complicated connection between cooling channels inside the nuts to side covers, which set several inside through channels, which are located at two sides of the nut respectively and does allow the formation of a cooling medium circulating channel. An even more complicated setup, which is disclosed in US 3,068,713 teaches a nut and screw drive device of recirculating ball type, in which the nut or the screw are formed with a chamber adapted to receive a flow of a fluid coolant, which communicates through at least one duct the ball-containing zone to deliver the coolant thereto.

Also related to the matter of the invention is the closest prior art document JP 2001108052 A. This document discloses a ball screw feed device which has a compact cooling mechanism without causing large size and complication of the device. The system disclosed in that document consists of a servo-motor joined to one end of a screw shaft and a ball nut, which is mounted to an intermediate portion of the screw shaft. A jacket is mounted to the other end of the screw shaft to a seal ring. This jacket is supported by a housing, and a cavity portion is formed between the jacket and an end surface of the screw shaft. A coolant flow hole is formed in the center of the screw shaft and opens in the cavity portion, and its tip reaches proximity of one end. A coolant deliver pipe is inserted into the coolant flow hole and feeds coolant to the tip of the coolant flow hole and feeds coolant to the tip of the coolant flow hole. The coolant flows through a clearance formed between the coolant flow hole and the coolant deliver pipe toward the rear end of the coolant flow hole.

However, this device also shows a similar problem to the one discussed above:

Coolant should be continuously supplied to the ball screw shaft even during the high-speed rotation of the ball screw shaft, and therefore, a sealing means is needed for a coolant supplying part. Air or cooling oil is used as coolant, which is selected according to the working conditions of the machine. Even when the sealing means is a little worn out, the coolant may flow to the outside, and to prevent the leakage of coolant, the sealing means has to be tightly mounted. However, such the sealing means is continuously contacted with the portion where the friction is always generated by the motion, and when it is worn or exhibits low durability, it should be exchanged with new one. At this time, of course, it is necessary to be detachably mounted with ease.

### SUMMARY OF THE INVENTION

Accordingly, the present invention has been made in view of the above-mentioned problem occurring in the prior art, and it is an object of the present invention to provide a cooling device for a ball screw assembly that is provided with sealing units exchangeable and maintainable with ease, while supplying coolant to the interior of a ball screw shaft, without any leakage.

As a side effect, the present invention provides a cooling device for a ball screw assembly that is capable of processing a cooling flow passageway with ease and providing a substantially small number of parts to improve the assembling capability, thereby obtaining a better cooling effect for a ball nut.

To accomplish the above object, according to the present invention, there is provided a cooling device for a ball screw assembly having a ball screw shaft having a first spirally disposed ball groove formed around the outer circumferential surface thereof, a ball nut adapted to be fit around the ball screw shaft and having a second spirally disposed ball groove formed around the inner circumferential surface thereof to correspond to the first spirally disposed groove, a plurality of balls rotatably interposed between the first and second spirally disposed grooves, thereby converting the rotary force from the ball screw shaft into the driving force of the ball nut, the cooling device comprising: a coolant-circulating flow passageway formed penetrated along the central portion of the ball screw shaft in an axial direction of the ball screw shaft and closed at the both ends thereof, the coolant-circulating flow passageway having at least one or more coolant inlet and outlet openings formed on the both sides thereof in a radial direction thereof; a chamber adapted to communicate with the coolant inlet and outlet openings and formed around the circumferential surface of the ball screw shaft; a pair of sealing means formed hermetically sealed around the outer circumferential surface of the ball screw shaft at axial both ends in an axial direction of the chamber for preventing the leakage of coolant between the chamber and the outer circumferential surface of the ball screw shaft; and coolant supplying and discharging means adapted to communicate with the chamber for supplying and discharging the coolant to/from the chamber, wherein
each of the sealing means comprises: a pair of ring-like sealing members axially disposed at the both ends of the chamber in such a manner as to be hermetically sealed around the outer circumferential surface of the ball screw shaft; a pair of sealing member covers adapted to be fit around the outer circumferential surface of the ball screw shaft such that the pair of ring-like sealing members are closely contacted with the both ends of the chamber; and a sealing member housing adapted to encompass the circumferential surfaces of the pair of ring-like sealing members and having an inlet/outlet port formed to communicate with the outside.

The pair of sealing member covers are secured to the both ends of the sealing member housing by means of a fastening means. The ball nut further comprises: a cooling sleeve mounted around the outer circumferential surface thereof, the cooling sleeve having a coolant-circulating groove spirally disposed around the inner circumferential surface thereof; coolant inlet and outlet holes formed between the outer and inner circumferential surfaces thereof in such a manner as to communicate with the coolant-circulating groove in an axial direction thereof; and coolant inlet and outlet ports formed at a flange portion of the ball nut in such a manner as to communicate with the coolant inlet and outlet holes.

The cooling sleeve is further provided with an intermediate sleeve adapted to be interposed between the inner circumferential surface thereof and the outer circumferential surface of the ball nut.

The cooling sleeve is secured to one side portion of the flange portion of the ball nut by means of a fastening means.

The cooling sleeve is further provided with O-rings formed at the both ends of the inner circumferential surface thereof for blocking the leakage of the coolant from the coolant-circulating groove.

The ball nut further comprises: a coolant-circulating groove spirally disposed around the outer circumferential surface thereof; a cooling sleeve fit around the outer circumferential surface thereof for encompassing the coolant-circulating groove, the cooling sleeve having coolant inlet and outlet holes formed in an axial direction thereof between the outer and inner circumferential surfaces thereof in such a manner as to communicate with the coolant-circulating groove; and coolant inlet and outlet pipes formed at the both inner top and bottom portions of a flange portion thereof, the coolant inlet pipe communicating with the coolant inlet hole and the coolant outlet pipe communicating with the coolant outlet hole.

The cooling sleeve is secured to one side portion of the flange portion of the ball nut by means of a fastening means.

The ball nut is further provided with O-rings formed at the both ends of the outer circumferential surface thereof for blocking the leakage of the coolant from the coolant-circulating groove.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a sectional view showing the configuration of a cooling device for a ball screw assembly according to a first embodiment of the present invention;
FIG. 2a is an enlarged sectional view showing the sealing unit of FIG.1;
FIG. 2b is a view showing an enlarged K part of FIG.1
FIG. 3 is a sectional view showing the configuration of a cooling device for a ball screw assembly according to a second embodiment of the present invention;
FIG. 4 is a sectional view taken along the line A-A in FIG.3;
FIG. 5 is a front sectional view showing the cooling sleeve employed in the second embodiment of the present invention;
FIG. 6 is a sectional view showing a variation of the cooling device according to the second embodiment of the present invention; and
FIG. 7 is a sectional view showing the configuration of a cooling device for a ball screw assembly according to a third embodiment of the present invention.

### DETAILED DESCRIPTION OF THE PREFERRED EMBODIMENT

Reference will now be made in detail to the preferred embodiments of the present invention, examples of which are illustrated in the accompanying drawings.

### <first embodiment>

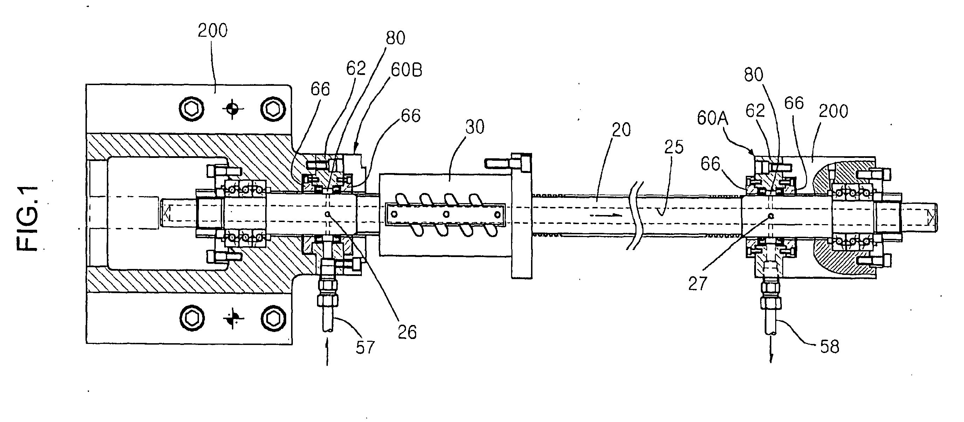

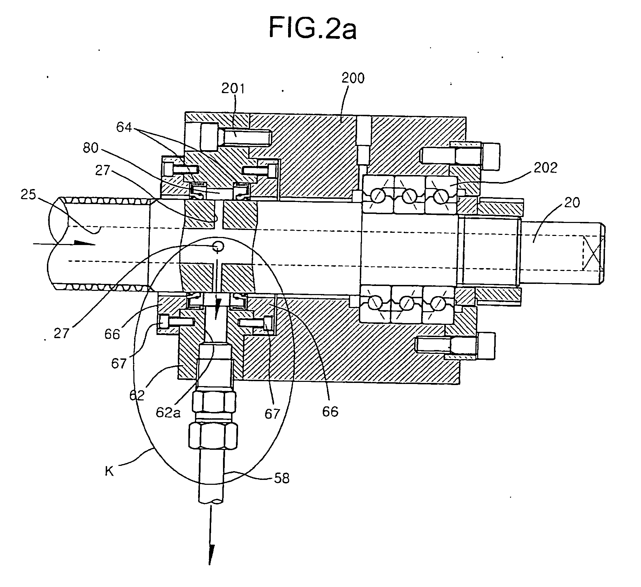

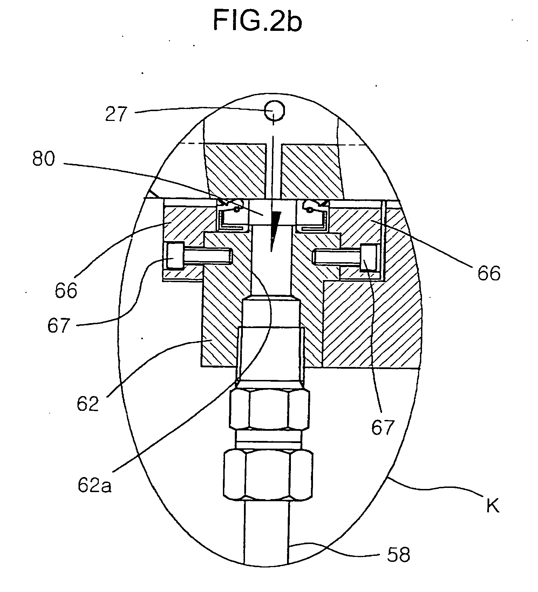

A first embodiment of the present invention is carried out by the ball screw assembly as shown in FIGS. 1 and 2. As shown, the ball screw assembly is provided with a ball screw shaft 20 having a spirally disposed ball groove 21 formed by a prescribed distance around the outer circumferential surface thereof.

A ball nut 30 is fit around the ball screw shaft 20. The ball nut 30 has a spirally disposed ball groove 31 formed around the inner circumferential surface thereof to correspond to the spirally disposed ball groove 21 of the ball screw shaft 20.

Also, a plurality of balls 40 are disposed between the outer circumferential surface of the ball screw shaft 20 and the inner circumferential surface of the ball nut 30 in such a manner as to be rotatably interposed between the spirally disposed ball grooves 21 and 31, thereby making the ball screw shaft 20 and the ball nut 30 able to rotate with each other.

As shown in FIGS.1, 2a and 2b, according to the first embodiment of the present invention, the cooling device for the ball screw assembly is provided with a coolant-circulating flow passageway 25 formed penetrated along the middle portion of the ball screw shaft 20 in an axial direction of the ball screw shaft 20 and closed at the both ends thereof. The coolant-circulating flow passageway 25 has at least one or more coolant inlet and outlet openings 26 and 27 formed on the both sides thereof in a radial direction thereof.

Further, the cooling device is provided with a chamber 80 formed around the circumferential surface of the ball screw shaft 20 in such a manner as to communicate with the coolant inlet and outlet openings 26 and 27.

Further, the cooling device is provided with sealing units 60A and 60B formed hermetically sealed around the outer circumferential surface of the ball screw shaft 20 at the both ends in an axial direction of the chamber 80 for preventing the leakage of coolant between the chamber 80 and the outer circumferential surface of the ball screw shaft 20.

While the ball screw shaft 20 is being rotated, the sealing units 60A and 60B serve to prevent the leakage of the coolant flowing to and from the coolant-circulating flow passageway 25. With the continuous supply of the coolant, as a result, the heated portion on the ball screw shaft 20 is favorably cooled down.

In the first embodiment of the present invention, particularly, the sealing units 60A and 60B are configured such that sealing members can be exchanged in an easier manner when compared with the conventional manner where the entire ball screw shaft 20 is separated for the exchanging work.

That is, the sealing units 60A and 60B have the same structure of protecting the leakage of coolant flowing in and out through the chamber 80.

Referring thus to the structure-of the sealing unit 60A, therefore, the sealing unit 60A is provided with a pair of ring-like sealing members 64 disposed at the both ends in the axial direction of the chamber 80 in such a manner as to be hermetically sealed around the outer circumferential surface of the ball screw shaft 20, a pair of sealing member covers 66 adapted to be fit around the outer circumferential surface of the ball screw shaft 20 such that the pair of ring-like sealing members 64 are closely contacted with the both ends of the chamber 80, and a sealing member housing 62 adapted to encompass the outer circumferential surfaces of the pair of ring-like sealing members 64 and having an inlet/outlet port 62a formed to communicate with the outside.

The pair of sealing member covers 66 are secured to the both ends of the sealing member housing 62 by means of a bolt 67, and the pair of ring-like sealing members 64 are disposed at a given position such that the coolant inlet and outlet openings 26 and 27 communicate with the inlet and outlet ports 62a formed on the sealing member housing 62.

The sealing unit is mounted by securing the sealing member housing 62 on a shaft support 200 by means of a bolt 201. The shaft support 200 has a bearing 202 for supporting the ball screw shaft 20 thereon, and the one end of the ball screw shaft 20 is rotated by the actuation of a servo motor (not shown).

If the coolant flows through a coolant supplying pipe 57, as shown in FIG.1, it is flows to the coolant inlet opening 26 in a radial direction of the ball screw shaft 20 via one side chamber 80 and after that, it is passed through the coolant-circulating flow passageway 25 in the axial direction of the ball screw shaft 20. Next, the coolant flows from the coolant outlet opening 27 in the radial direction via the other side chamber 80 and flows out through a coolant discharging pipe 58.

According to the first embodiment of the present invention, the coolant flows through the coolant-circulating flow passageway 25 formed along the middle portion of the ball screw shaft 20 and closed at the both end portions thereof, absorbing the heat generated from the ball screw shaft 20 and emitting the absorbed heat to the air.

At this time, even though the ball screw shaft 20 is rotated to make the ball nut 30 carry out the linear motion, the coolant flowing to the coolant-circulating flow passageway 25 of the ball screw shaft 20 is not leaked around by means of the formation of the sealing member housing 62. In other words, the coolant is not leaked between the chamber 80 and the outer circumferential surface of the ball screw shaft 20 by means of the ring-like sealing members 64 at the chamber 80 side.

In the first embodiment of the present invention, especially, even when the ring-like sealing members 64 are worn by the friction against the ball screw shaft 20, they can be exchanged with new ones in a simple manner.

That is, for the exchanging work of the ring-like sealing members 64, the sealing member housing 62 is first demounted from the shaft support 200 by unfastening the bolt 201, and then, if the both side sealing member covers 66 are separated, the ring-like sealing members 64 are exposed. At this time, the ring-like sealing members 64 can be exchanged with new ones with ease. Therefore, when compared with the conventional way where the bearing supporting the ball screw shaft is demounted and the ball screw shaft is drawn in a lengthwise direction thereof to the outside before the exchanging work, the sealing members according to the present invention can be exchanged in an easier way, thereby improving the maintaining capability thereof.

### <second embodiment>

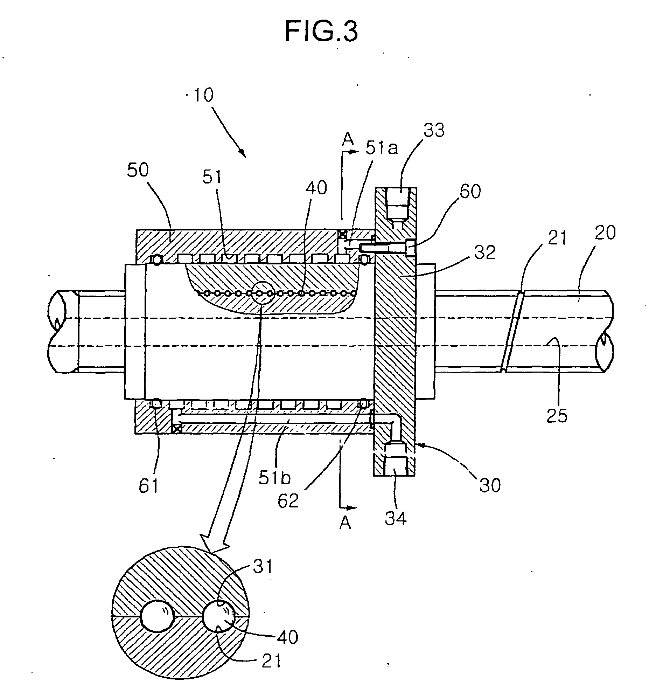

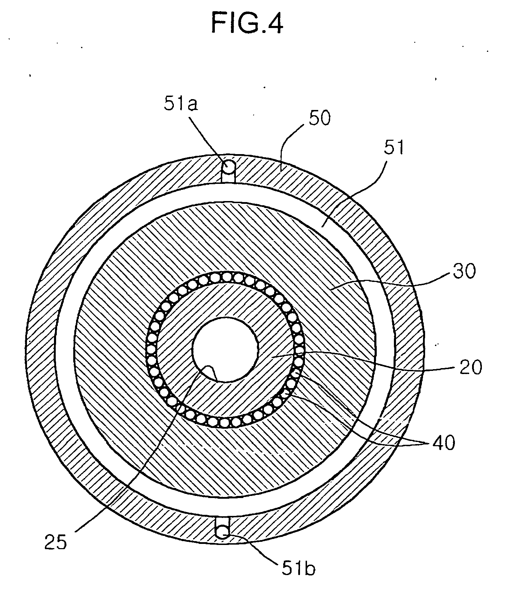

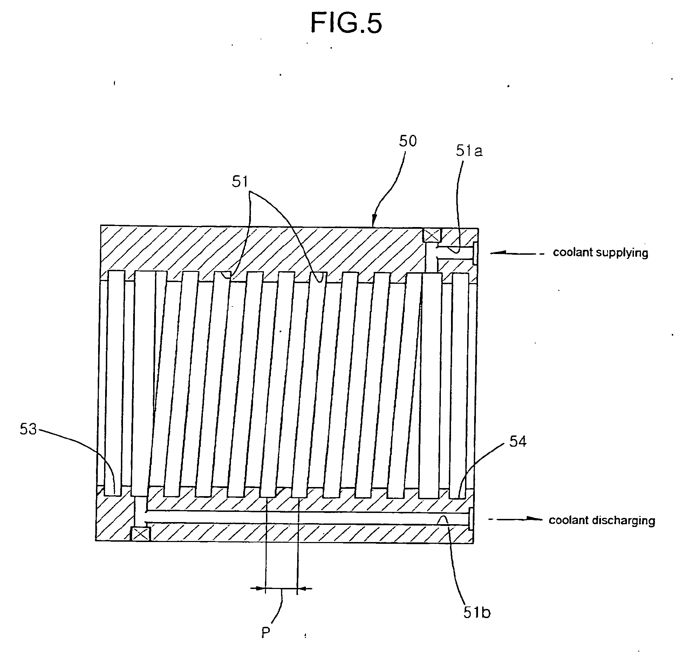

FIG. 3 is a sectional view showing the configuration of a cooling device for a ball screw assembly 10 according to a second embodiment of the present invention, FIG. 4 is a sectional view taken along the line A―A in FIG.3; and FIG. 5 is a front sectional view showing a cooling sleeve employed in the second embodiment of the present invention.

The second embodiment of the present invention includes the same cooling device as the first embodiment of the present invention, but further includes a cooling sleeve 50 adapted to be fit around the outer circumferential surface of the ball nut 30, as shown in FIG.3.

The cooling sleeve 50 has a coolant-circulating groove 51 spirally disposed around the inner circumferential surface thereof, coolant inlet and outlet holes 51a and 51b formed between the outer and inner circumferential surfaces thereof in such a manner as to communicate with the coolant-circulating groove 51 in an axial direction thereof, and coolant inlet and outlet pipes 33 and 34 formed at the both inner top and bottom portions of the flange portion 32 of the ball nut 30 in such a manner as to communicate with the coolant inlet and outlet holes 51a and 51b.

The cooling sleeve 50 is preferably made of a metal material (e.g., aluminum, and the like) having excellent thermal conductivity and is in a cylindrical shape.

The inner diameter of the cooling sleeve 50 is the same as the outer diameter of the ball nut 30 such that the cooling sleeve 50 is fit around the outer circumferential surface of the ball nut 30, and the cooling sleeve 50 is mounted to the one end of the flange portion 32 of the ball nut 30 by means of the coupling of a plurality of bolts 60.

The cooling sleeve 50 has the spirally disposed coolant-circulating groove 51 formed on the inner circumferential surface thereof. The coolant-circulating groove 51 is a cooling flow passageway for circulation of coolant that is spirally formed in a circumferential direction of the cooling sleeve 50. Thus, the coolant-circulating groove 51 makes the cooling effect different, depending upon the pitch P and the sectional area thereof, as shown in FIG.5. In this case, the sectional area of the groove may be considered as that of the cooling flow passageway.

In other words, as the pitch P becomes smaller, the number of turning times of coolant is increased, and as the sectional area of the cooling flow passageway becomes increased, an amount of absorption of frictional heat during motion is increased. In the preferred embodiments of the present invention, the sectional area of the groove is generally square, which is not necessarily limited thereto.

The coolant-circulating groove 51 communicates with the coolant inlet and outlet holes 51a and 51b, respectively. The coolant inlet hole 51a communicates with the coolant inlet pipe 33 formed on the flange portion 32 of the ball nut 30, and the coolant outlet hole 51b communicates with the coolant outlet pipe 34 formed on the flange portion 32 of the ball nut 30.

The cooling sleeve 50 is further provided with round O-ring grooves 53 and 54 formed at the both ends of the inner circumferential surface thereof, as shown in FIG.5, for inserting O-rings 61 and 62, as shown in FIG.3, that serve to block a slight quantity of coolant flowing from the coolant-circulating groove 51 thereinto.

With such the ball screw assembly 10 as constructed above, the cooling device of the present invention achieves a better cooling effect for the ball nut 30 by the following actions:
First, the air or coolant that flows to the coolant inlet pipe 33 is passed through the inlet hole 51a of the cooling sleeve 50 and flows spirally along the coolant-circulating groove 51. As the air or coolant guided along the coolant-circulating groove 51 flows in a state of being contacted with the outer circumferential surface of the ball nut 30, the heat generated from the ball nut 30 can be rapidly absorbed.

The heat absorbed by the coolant is passed through the coolant outlet hole 51b of the cooling sleeve 50 and discharged to the coolant outlet pipe 34 of the ball nut 30. Then, if the coolant is air, the air is emitted to the air, meanwhile if the coolant is cooling oil, the cooling oil is processed through a well known cooling unit (which is not shown) and supplied again to the coolant inlet pipe 33 for the circulation of the coolant-circulating groove 51.

The air or the cooling oil, which is circulated along the coolant-circulating groove 51 along the outer circumferential surface of the ball nut 30, is always circulated many times while encircling the outer circumferential surface of the ball nut 30, thereby enabling the frictional heat during motion of the ball nut 30 to be absorbed and discharging the absorbed heat to the outside. This allows the heat generated from the ball nut 30, the balls 40, and the ball screw shaft 20 to be all cooled down.

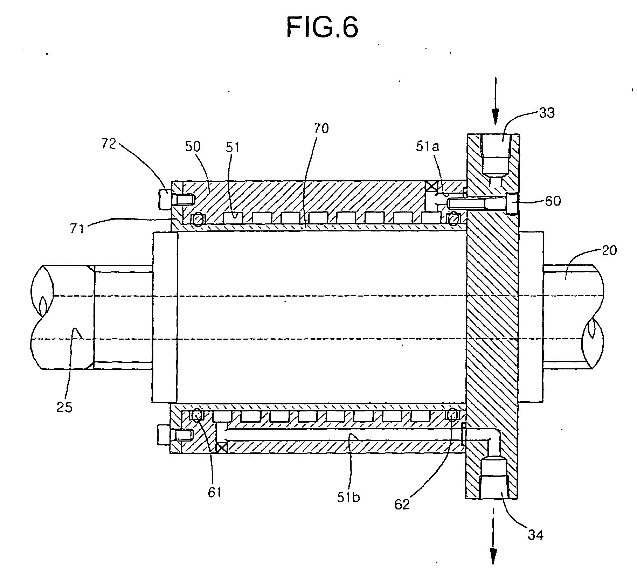

On the other hand, a variation of the cooling device according to the second embodiment of the present invention is shown in FIG. 6.

According to the variation, as shown in FIG.6, the cooling sleeve 50 is further provided with an intermediate sleeve 70 adapted to be interposed between the inner circumferential surface of the cooling sleeve 50 and the outer circumferential surface of the ball nut 30. The intermediate sleeve 70 is formed of a cylinder having a flange portion 71. The intermediate sleeve 70 is fixedly mounted to one side portion of the cooling sleeve 50 as the flange portion 71 is coupled with the cooling sleeve 50 by means of bolts 72.

At this time, the O-rings 61 and 62 block the leakage of a slight quantity of coolant between the inner circumferential surface of the cooling sleeve 50 and the outer circumferential surface of the intermediate sleeve 70 such that the coolant is not leaked to the outside.

The second embodiment of the present invention and the variation thereof have the following advantages:
First, it is easy to process the coolant-circulating groove 51 formed around the inner circumferential surface of the cooling sleeve 50. Also, it is easy to freely vary the pitch P and the sectional area of the flow passageway of the coolant-circulating groove 51, thereby making the cooling effect maximized.
Second, the cooling sleeve 50 is fit around the ball nut 30, such that it is assembled and disassembled to the ball nut 30 with ease, which enhancing the maintaining capability thereof.
Third, the coolant can be guided to the ball nut 30, without any structural change of the ball nut 30, such that the cooling device of this invention can be directly mounted to the existing ball screw assembly.

Thereby, the cooling device of this invention gives another advantages in that the number of defective parts is reduced and the productivity and quality are greatly improved.

### <third embodiment>

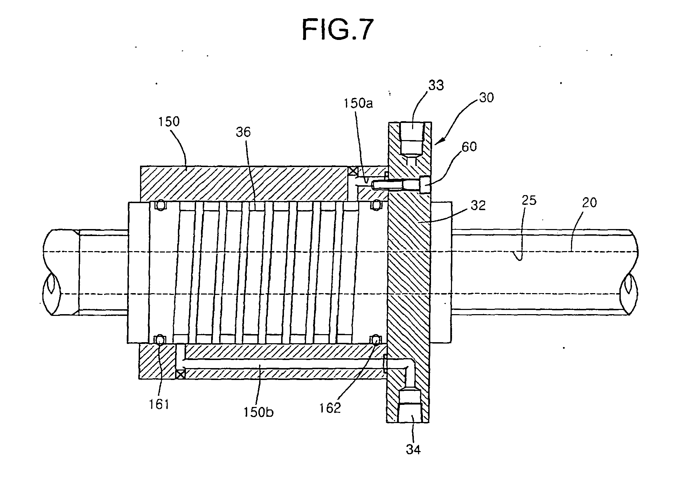

A third embodiment of the present invention is shown in FIG. 7. According to the third embodiment of the present invention, as shown in FIG.7, a spirally disposed coolant-circulating groove 36 is formed around the outer circumferential surface of the ball nut 30, and a cooling sleeve 150 is fit around the outer circumferential surface of the ball nut 30 for encompassing the coolant-circulating groove 36. The cooling sleeve 150 is secured to the one end portion of the flange portion 32 of the ball nut 30 by means of a bolt 60.

The coolant-circulating groove 36 communicates with coolant inlet and outlet holes 150a and 150b. The coolant inlet hole 150a communicates with the coolant inlet pipe 33 formed on the flange portion 32 of the ball nut 30, and the coolant outlet hole 150b communicates with the coolant outlet pipe 34 formed on the flange portion 32 of the ball nut 30.

O-ring grooves 161 and 162 are formed at the both ends of the outer circumferential surface of the ball nut 30, for blocking the air or coolant flowing from the coolant-circulating groove 36.

In the third embodiment of the present invention, the spirally disposed coolant-circulating groove 36 is formed around the outer circumferential surface of the ball nut 30, and the cooling sleeve 150 is fit around the outer circumferential surface of the ball nut 30 for encompassing the coolant-circulating groove 36. Therefore, the frictional heat generated from the ball nut 30 during motion is absorbed along the spirally disposed coolant-circulating groove 36 by means of the air or cooling oil and then discharged to the coolant outlet pipe 34.

In the second embodiment of the present invention, the coolant-circulating groove 36 may be formed around the outer circumferential surface of the ball nut 30, and after the O-rings 161 and 162 are fit around the outer circumferential surface of the ball nut 30, the cooling sleeve 150 is fit around the outer circumferential surface of the ball nut 30, thereby finishing the mounting work.

In the third embodiment of the present invention, furthermore, the coolant-circulating groove 36 can be easily formed, and the cylindrical cooling sleeve 150 can be made simply, thereby making the assembling and disassembling easy and improving the maintaining capability thereof.

While the present invention has been described with reference to the particular illustrative embodiments, it is not to be restricted by the embodiments but only by the appended claims, and therefore, it is to be understood that other modifications and variations may be made without departing from the substance and scope of the present invention, as those skilled in the art will readily understand. Such alternate modifications and variations are within the scope of the present invention which is intended to be limited only by the appended claims and equivalents thereof.

As set forth in the foregoing, there is provided a cooling device for a ball screw assembly that is capable of being processed, assembled, and maintained in easy and rapid manners, thereby improving the productivity and quality thereof.

Additionally, the cooling device of this invention is capable of making the ring-like sealing members block the leakage of coolant separated with ease, thereby enabling the exchanging work thereof to be carried out easily and simply.

## Claims

1. A cooling device for a ball screw assembly having a ball screw shaft (20) having a first spirally disposed ball groove (21) formed around the outer circumferential surface thereof, a ball nut (30) adapted to be fit around the ball screw shaft and having a second spirally disposed ball groove (31) formed around the inner circumferential surface thereof to correspond to the first spirally disposed groove (21), a plurality of balls (40) rotatably interposed between the first and second spirally disposed grooves (21,31), thereby converting the rotary force from the ball screw shaft (20) into the driving force of the ball nut (30),
the cooling device comprising:
a coolant-circulating flow passageway (25) formed penetrated along the central portion of the ball screw shaft in an axial direction of the ball screw shaft and closed at the both ends thereof, the coolant-circulating flow passageway having at least one or more coolant inlet and outlet openings (26,27) formed on the both sides thereof in a radial direction thereof;
a chamber (80) adapted to communicate with the coolant inlet and outlet openings (26,27) and formed around the circumferential surface of the ball screw shaft;
a pair of sealing means (60A,60B) formed hermetically sealed around the outer circumferential surface of the ball screw shaft at axial both ends in an axial direction of the chamber for preventing the leakage of coolant between the chamber and the outer circumferential surface of the ball screw shaft; and
each of the sealing means comprises a pair of ring-line sealing members (64) axially disposed at the both ends of the chamber in such a manner as to be hermetically sealed around the outer circumferential surface of the ball screw shaft; and a sealing member housing (62) adapted to encompass the circumferential surfaces of the pair of ring-like sealing members and having an inlet/outlet port (62a) formed to communicate with the outside; and coolant supplying and discharging means (57,58) adapted to communicate with the chamber for supplying and discharging the coolant to/from the chamber ; and **characterized in that** a pair of sealing member covers (66) adapted to be fit around the outer circumferential surface of the ball screw shaft (20) such that the pair of ring-like sealing members are closely contacted with the both ends of the chamber.

2. The cooling device as defined in claim 1, wherein the pair of sealing member cover's are secured to the both ends of the sealing member housing by means of fastening means.

3. The cooling device as defined in claim 1, wherein the ball nut further comprises: a cooling sleeve mounted around the outer circumferential surface thereof, the cooling sleeve having a coolant-circulating groove spirally disposed around the inner circumferential surface thereof;
coolant inlet and outlet holes formed between the outer and inner circumferential surfaces thereof in such a manner as to communicate with the coolant-circulating groove in a axial direction thereof; and
coolant inlet and outlet ports formed at a flange portion of the ball nut in such a manner as to communicate with the coolant inlet and outlet holes; and wherein the cooling sleeve is further provided with O-rings formed at the both ends of the inner circumferential surface thereof for blocking the leakage of the coolant from the coolant-circulating groove.

4. The cooling device as defined in claim 3, wherein the cooling sleeve is further provided with an intermediate sleeve adapted to be interposed between the inner circumferential surface thereof and the outer circumferential surface of the ball nut.

5. The cooling device as defined in claim 3, wherein the cooling sleeve is secured to one side portion of the flange portion of the ball nut by means of fastening means.

6. The cooling device as defined in claim 1, wherein the ball nut further comprises:
a coolant-circulating groove spirally disposed around the outer circumferential surface thereof;
a cooling sleeve fit around the outer circumferential surface thereof for encompassing the coolant-circulating groove, the cooling sleeve having coolant inlet and outlet holes axially formed between the outer and inner circumferential surfaces thereof in such a manner as to communicate with the coolant-circulating groove; and
coolant inlet and outlet ports formed at a flange portion thereof;
the coolant inlet port communicating with the coolant inlet hole and the coolant outlet port communicating with the coolant outlet hole; and wherein the ball nut is further provided with O-rings formed at the both ends of the outer circumferential surface thereof for blocking the leakage of the coolant from the coolant-circulating groove.

7. The cooling device as defined in claim 6, wherein the cooling sleeve is secured to one side portion of the flange portion of the ball nut by means of fastening means.

## Patentansprüche

1. Eine Vorrichtung zum Kühlen für eine Kügelspindelanordnung mit einer Kugelspindelwelle (20), die eine erste spiralförmig angeordnete Kugelnut (21), welche um ihre äußere Umfangsfläche ausgebildet ist, einer Kugelmutter (30), die dazu ausgestaltet ist, auf die Kugelspindelwelle aufgesetzt zu werden und die eine zweite spiralförmig angeordnete Kugelnut (31) aufweist, welche um ihre innere Umfangsfläche so ausgebildet ist, dass sie der ersten spiralförmig vorgesehenen Nut (21) zugeordnet ist, einer Vielzahl von Kugeln (40), die drehbar zwischen den ersten und zweiten spiralförmig vorgesehenen Nuten (21, 31) angeordnet sind, wodurch die Drehkraft von der Kugelspindelwelle (20) in die Antriebskraft der Kugelmutter (30) umgewandelt wird,
wobei die Vorrichtung zum Kühlen aufweist:
einen Kühlmittel-Zirkulations-Strömungsdurchgang (25), der so ausgebildet ist, dass er entlang des zentralen Abschnitts der Kugelspindelwelle in einer axialen Richtung der Kugelspindelwelle durchtritt und an seinen beiden Enden geschlossen ist, wobei der Kühlmittel-Zirkulations-Strömungsdurchgang wenigstens einen oder mehrere Kühlmitteleinlass- und -auslassöffnungen (26, 27) aufweist, die an seinen beiden Seiten in seiner Radialrichtung ausgebildet sind;
eine Kammer (80), die dazu ausgestaltet ist, mit den Kühlmitteleinlass- und -auslassöffnungen (26, 27) in Verbindung zu treten und die um die Umfangsfläche der Kugelspindelwelle ausgebildet ist;
ein Paar von Dichtmitteln (60A, 60B), die hermetisch abgedichtet um die äußere Umfangsfläche der Kugelspindelwelle an beiden axialen Enden in einer axialen Richtung der Kammer ausgebildet sind, um die Leckage von Kühlmitteln zwischen der Kammer und der äußeren Umfangsfläche der Kugelspindelwelle zu verhindern; und
jedes der Dichtmittel weist ein Paar von ringähnlichen Dichtelementen (64) auf, die axial an den beiden Enden der Kammer derart vorgesehen sind, dass sie hermetisch um die äußere Umfangsfläche der Kugelspindelwelle abgedichtet sind; und ein Dichtelementgehäuse (62), das dazu ausgestaltet ist, die Umfangsflächen des Paares von ringähnlichen Dichtelementen zu umgeben, und einen das Einlass/Auslassanschluss (62a) aufweist, der so ausgebildet ist, dass er mit der Umgebung in Verbindung steht; und Kühlmittelzufuhr- und -abfuhrmittel (57, 58), die dazu ausgestaltet sind, mit der Kammer in Verbindung zu treten, um das Kühlmittel zu/von der Kammer zuzuführen bzw. abzuführen; und
**dadurch gekennzeichnet, dass** ein Paar von Dichtelementabdeckungen (66), dazu ausgestaltet ist, um die äußere Umfangsfläche der Kugelspindelwelle (20) aufgesetzt zu werden, so dass das Paar von ringähnlichen Dichtelementen in engem Kontakt mit den beiden Enden der Kammer steht.

2. Die Vorrichtung zum Kühlen nach Anspruch 1, wobei das Paar von Dichtelementabdeckungen an den beiden Enden des Dichtelementgehäuses mit Hilfe von Befestigungsmitteln angebracht ist.

3. Die Vorrichtung zum Kühlen nach Anspruch 1, wobei die Kugelmutter außerdem aufweist: eine Kühlhülse, die um ihre äußere Umfangsfläche angebracht ist, wobei die Kühlhülse eine Kühlmittelzirkulationsnut aufweist, die spiralförmig um ihre innere Umfangsfläche vorgesehen ist;
Kühlmitteleinlass- und -auslassöffnungen, die zwischen ihren äußeren und inneren Umfangsflächen derart ausgebildet sind, dass sie in ihrer axialen Richtung mit der Kühlmittelzirkulationsnut in Verbindung stehen; und
Kühlmitteleinlass- und -auslassanschlüsse, die an einem Flanschabschnitt der Kugelmutter derart ausgebildet sind, dass sie mit den Kühlmitteleinlass- und - auslassöffnungen in Verbindung stehen; und wobei die Kühlhülse außerdem O-Ringe aufweist, die an beiden Enden ihrer inneren Umfangsfläche ausgebildet sind, um die Leckage des Kühlmittels aus der Kühlmittelzirkulationsnut zu blockieren.

4. Die Vorrichtung zum Kühlen nach Anspruch 3, wobei die Kühlhülse außerdem eine Zwischenhülse aufweist, die dazu ausgestaltet ist, zwischen der inneren Umfangsfläche der Kühlhülse und der äußeren Umfangsfläche der Kugelmutter angeordnet zu werden.

5. Die Vorrichtung zum Kühlen nach Anspruch 3, wobei die Kühlhülse an einem Seitenabschnitt des Flanschabschnitts der Kugelmutter mit Hilfe von Befestigungsmitteln angebracht ist.

6. Die Vorrichtung zum Kühlen nach Anspruch 1, wobei die Kugelmutter außerdem aufweist:
eine Kühlmittelzirkulationsnut, die spiralförmig um die äußere Umfangsfläche der Kugelmutter vorgesehen ist;
eine Kühlhülse, die um ihre äußere Umfangsfläche gesetzt ist, um die Kühlmittelzirkulationsnut zu umgeben, wobei die Kühlhülse Kühlmitteleinlass- und -auslassöffnungen aufweist, die axial zwischen ihren äußeren und inneren Umfangsflächen derart ausgebildet sind, dass sie mit der Kühlmittelzirkulationsnut in Verbindung stehen; und Kühlmitteleinlass- und -auslassanschlüsse, die an einem Flanschabschnitt der Kugelmutter ausgebildet sind;
wobei der Kühlmitteleinlassanschluss mit der Kühlmitteleinlassöffnung in Verbindung steht und der Kühlmittelauslassanschluss mit der Kühlmittelauslassöffnung in Verbindung steht; und wobei die Kugelmutter außerdem O-Ringe aufweist, die an den beiden Enden ihrer äußeren Umfangsfläche ausgebildet sind, um die Leckage des Kühlmittels aus der Kühlmittelzirkulationsnut zu blockieren.

7. Die Vorrichtung zum Kühlen nach Anspruch 6, wobei die Kühlhülse an einem Seitenabschnitt des Flanschabschnitts der Kugelmutter mit Hilfe von Befestigungsmitteln angebracht ist.

## Revendications

1. Dispositif de refroidissement pour un ensemble de vis sphérique ayant une tige (20) de vis sphérique ayant une première rainure sphérique (21) disposée en spirale, formée autour de sa surface circonférentielle externe, un écrou sphérique (30) adapté pour être monté autour de la tige de vis sphérique et ayant une seconde rainure sphérique (31) disposée en spirale formée autour de sa surface circonférentielle interne pour correspondre à la première rainure (21) disposée en spirale, une pluralité de billes (40) intercalée de manière rotative entre les première et seconde rainures (21, 31) disposées en spirale, convertissant ainsi la force rotative de la tige de vis sphérique (20) en forme d'entraînement de l'écrou sphérique (30),
le dispositif de refroidissement comprenant :
une voie de passage d'écoulement de circulation de réfrigérant (25) formée en pénétrant le long de la partie centrale de la tige de vis sphérique dans une direction axiale de la tige de vis sphérique et fermée au niveau de ses deux extrémités, la voie de passage d'écoulement de circulation de réfrigérant ayant au moins une ou plusieurs ouvertures d'entrée et de sortie de réfrigérant (26, 27) formées sur ses deux côtés dans sa direction radiale ;
une chambre (80) adaptée pour communiquer avec les ouvertures d'entrée et de sortie de réfrigérant (26, 27) et formée autour de la surface circonférentielle de la tige de vis sphérique ;
une paire de moyens d'étanchéité (60A, 60B) formée en étant hermétiquement étanches autour de la surface circonférentielle externe de la tige de vis sphérique au niveau des deux extrémités axiales dans une direction axiale de la chambre pour empêcher la fuite du réfrigérant entre la chambre et la surface circonférentielle externe de la tige de vis sphérique ; et
chacun des moyens d'étanchéité comprend une paire d'éléments d'étanchéité de forme annulaire (64) disposés axialement au niveau des deux extrémités de la chambre afin d'être hermétiquement étanches autour de la surface circonférentielle externe de la tige de vis sphérique ; et un boîtier d'élément d'étanchéité (62) adapté pour englober les surfaces circonférentielles de la paire d'éléments d'étanchéité de forme annulaire et ayant un orifice d'entrée / de sortie (62a) formé pour communiquer avec l'extérieur ; et des moyens d'alimentation et de décharge de réfrigérant (57, 58à adaptés pour communiquer avec la chambre pour alimenter et décharger le réfrigérant à / de la chambre ; et
**caractérisé en ce que** une paire de couvercles d'élément d'étanchéité (66) est adaptée pour être montée autour de la surface circonférentielle externe de la tige de vis sphérique (20) de sorte que la paire d'éléments d'étanchéité de forme annulaire est en contact avec les deux extrémités de la chambre.

2. Dispositif de refroidissement selon la revendication 1, dans lequel la paire de couvercles d'élément d'étanchéité est fixée aux deux extrémités du boîtier d'élément d'étanchéité au moyen de moyens de fixation.

3. Dispositif de refroidissement selon la revendication 1, dans lequel l'écrou sphérique comprend en outre un manchon de refroidissement monté autour de sa surface circonférentielle externe, le manchon de refroidissement ayant une rainure de circulation de réfrigérant disposée en spirale autour de sa surface circonférentielle interne ;
des trous d'entrée et de sortie de réfrigérant formés entre ses surfaces circonférentielles externe et interne afin de communiquer avec la rainure de circulation de réfrigérant dans sa direction axiale ; et
des orifices d'entrée et de sortie de réfrigérant formés au niveau d'une partie de rebord de l'écrou sphérique afin de communiquer avec les trous d'entrée et de sortie de réfrigérant ; et dans lequel le manchon de refroidissement est en outre doté de joints toriques formés au niveau des deux extrémités de sa surface circonférentielle interne pour empêcher la fuite du réfrigérant de la rainure de circulation de réfrigérant.

4. Dispositif de refroidissement selon la revendication 3, dans lequel le manchon de refroidissement est en outre doté d'un manchon intermédiaire adapté pour être intercalé entre sa surface circonférentielle interne et la surface circonférentielle externe de l'écrou sphérique.

5. Dispositif de refroidissement selon la revendication 3, dans lequel le manchon de refroidissement est fixé à une partie latérale de la partie de rebord de l'écrou sphérique au moyen de moyens de fixation.

6. Dispositif de refroidissement selon la revendication 1, dans lequel l'écrou sphérique comprend en outre :
une rainure de circulation de réfrigérant disposée en spirale autour de sa surface circonférentielle externe ;
un manchon de refroidissement monté autour de sa surface circonférentielle externe pour englober la rainure de circulation de réfrigérant, le manchon de refroidissement ayant des trous d'entrée et de sortie de réfrigérant formés de manière axiale entre ses surfaces circonférentielles externe et interne afin de communiquer avec la rainure de circulation de réfrigérant ; et
des orifices d'entrée et de sortie de réfrigérant formés au niveau de sa partie de rebord ;
l'orifice d'entrée de réfrigérant communiquant avec le trou d'entrée de réfrigérant et l'orifice de sortie de réfrigérant communiquant avec le trou de sortie de réfrigérant ; et dans lequel l'écrou sphérique est en outre doté de joints toriques formés aux deux extrémités de sa surface circonférentielle externe pour empêcher la fuite du réfrigérant de la rainure de circulation de réfrigérant.

7. Dispositif de refroidissement selon la revendication 6, dans lequel le manchon de refroidissement est fixé à une partie latérale de la partie de rebord de l'écrou sphérique au moyen de moyens de fixation.
